Europäisches Patentamt

European Patent Office

Office européen des brevets

(19)

(11) Veröffentlichungsnummer : **0 129 690**
**B1**

(12) EUROPÄISCHE PATENTSCHRIFT

(45) Veröffentlichungstag der Patentschrift :
01.02.89

(21) Anmeldenummer : 84105494.3

(22) Anmeldetag : 15.05.84

(51) Int. Cl.⁴ : **C 09 B 7/10,** C 09 B 67/10,
C 09 B 67/20

(54) Verfahren zur Herstellung von 4,4',7,7'-Tetrachlorthioindigo-Pigmenten.

(30) Priorität : 28.05.83 DE 3319450

(43) Veröffentlichungstag der Anmeldung :
02.01.85 Patentblatt 85/01

(45) Bekanntmachung des Hinweises auf die Patenterteilung : 01.02.89 Patentblatt 89/05

(84) Benannte Vertragsstaaten :
CH DE FR GB LI

(56) Entgegenhaltungen :
EP--A-- 0 056 868
EP--A-- 0 101 061
FR--A-- 2 300 117

(73) Patentinhaber : BAYER AG
Konzernverwaltung RP Patentabteilung
D-5090 Leverkusen 1 Bayerwerk (DE)

(72) Erfinder : Schütze, Detlef-Ingo, Dr.
Roggendorfstrasse 51
D-5000 Köln 80 (DE)

EP 0 129 690 B1

**Beschreibung**

Die Erfindung betrifft ein neues Verfahren zur Herstellung von 4,4',7,7'-Tetrachlorthioindigo-Pigmenten.

Tetrachlorthioindigo stellt wegen seines hohen Echtheitsniveaus einen wertvollen Farbstoff für das Färben von Lacken und Kunststoffen dar.

Verfahren zur Herstellung von Tetrachlorthioindigo-Pigmenten sind seit Jahrzehnten bekannt. Dabei werden sowohl die direkte Herstellung der Pigmentform, als auch Verfahren, die eine anschließende Formierung der Rohpigmente vorsehen, beschrieben.

Die Herstellung von Tetrachlorthioindigo erfolgt im allgemeinen entweder direkt aus der 2,5-Dichlorphenylthioglykolsäure oder aber über deren Säurechlorid. In beiden Fällen kann das Zwischenprodukt, das 3-Hydroxydichlorthionapthen, isoliert werden, das durch Oxidation zu Tetrachlorthioindigo umgesetzt wird.

Beispielsweise wird nach der DE-PS 241 910 substituierte Arylthioglykolsäure mit Chlorsulfonsäure bei 35 °C zu symmetrisch substituierten Thioindigo-Derivaten umgesetzt. Auch in der DE-OS 24 57 703 und der russischen Patentschrift 327 218 wird 2,5-Dichlorphenylthioglykolsäure in Chlorsulfonsäure umgesetzt, jedoch wird hierbei ein Gemisch aus Tetrachlorthioindigo und 3-Hydroxydichlorthionaphthen bzw. reines 3-Hydroxydichlorthionaphthen isoliert, die dann mit Luft bzw. mit Natrium-polysulfid zu Tetrachlorthioindigo oxidiert werden.

Ein weiteres Verfahren ist in der US-PS 2 158 032 beschrieben, bei dem Arylthioglykolsäuren mit Phosphortrichlorid in Chlorbenzol oder ähnlichen Lösungsmitteln in die Säurechloride überführt werden, die dann unter Zusatz von Aluminiumchlorid zu den 3-Hydroxythionaphten-Derivaten cyclisiert und anschließend durch Oxidation zu den Thioindigo-Derivaten umgesetzt werden.

Außerdem sei das Verfahren der DE-OS 28 25 313 angeführt. Hier wird ebenfalls die Arylthioglykolsäure zunächst in das entsprechende Säurechlorid überführt. Dieses wird dann in einer Schmelze bestehend aus Natriumchlorid/Schwefeldioxid/Aluminiumchlorid zu dem entsprechenden 3-Hydroxythionaphthen cyclisiert, das anschließend beispielsweise mit Luft zu den Thioindigo-Derivat oxidiert wird. Schließlich seien noch zwei Verfahren erwähnt, die zur Oxidation des 3-Hydroxydichlorthionaphthens Peroxodisulfat (DE-OS 25 04 395) bzw. Salze von aromatischen Nitrosulfonsäuren (DE-OS 31 01 883) verwenden.

Neben diesen Herstellungsverfahren, bei denen zum Teil Pigmente erhalten werden, die direkt in Einbrennlacken verwendet werden können, sind eine Reihe von Verfahren beschrieben, nach denen der erhaltene rohe Tetrachlorthioindigo, gegebenenfalls nach vorheriger Reinigungsoperation, durch Formierung in eine Pigmentform gebracht wird.

Beispielsweise kann die Formierung durch Mahlen mit Salz (DE-PS 11 37 156), durch Umfällen aus Schwefelsäure oder Chlorsulfonsäure mit anschließender Behandlung mit organischen Lösungsmitteln (DE-OS 25 04 962), durch Mahlen mit großen Mengen Dispergiermittel (BE-PS 591 437), durch Mahlen der Rohpigmente in wäßriger Suspension in Gegenwart einer wäßrigen Base (DE-AS 20 43 820), durch Einwirkung von Scherkräften bei der Oxidation der Leukoverbindung des Tetrachlorthioindigos in wäßrg-alkalischer Suspension in Gegenwart von Dithionit (EP-OS 18 000), durch Umküpung des Tetrachlorthioindigos mit Dithionit (DE-OS 31 17 056) oder durch Oxidation des 3-Hydroxy-dichlorthionaphthens mit aromatischen Nitrosulfonsäuren in wäßrig-alkalischer Suspension in Gegenwart von hochsiedenden mit Wasser nicht mischbaren aromatischen Flüssigkeiten erfolgen (EP-OS 56 868).

Das erfindungsgemäße Verfahren zur Herstellung von 4,4',7,7'-Tetrachlorthioindigo-Pigmenten durch Oxidation von 3-Hydroxy-4,7-dichlor-1-thionaphthen im wäßrig alkalischen Medium in Gegenwart von Sauerstoff oder Sauerstoff enthaltenden Gasen ist dadurch gekennzeichnet, daß man das Reaktionsprodukt nach der Oxidation mit einer organischen Flüssigkeit, die vor, während oder nach der Oxidation zugesetzt wird, bei Temperaturen von 60 °C bis 200 °C ; 2 h oder länger behandelt.

Vorzugsweise behandelt man 2 h bis 24 h.

Das in das erfindungsgemäße Verfahren eingesetzte 3-Hydroxy-4,7-dichlor-1-thionaphthen kann nach verschiedenen Verfahren erhalten werden und in reiner Form oder im Gemisch mit anderen Substanzen verwandt werden.

Vorzugsweise setzt man in das erfindungsgemäße Verfahren 3-Hydroxy-4,7-dichlor-1-thionaphthen oder ein Gemisch aus dieser Verbindung und 4,4',7,7'-Tetrachlorthioindigo ein, die durch Umsetzung von 2,5-Dichlorphenylthioglykolsäure in einem Gemisch aus Chlorsulfonsäure und einem weiteren Halogenid einer anorganischen Säure erhalten wurden (s. DE-OS 31 17 055).

Die Oxidation wird vorzugsweise mit Luft bei einem pH-Wert zwischen 9 und 14 durchgeführt. Zur Beschleunigung der Oxidation können Katalysatoren wie Metallsalze, -oxide, -hydroxide, die als Metall ein Übergangsmetall wie Cu, Co, Mn, Fe enthalten, Verwendung finden.

In die Lösungsmittelbehandlung werden entweder der durch Säurezugabe neutralisierte Oxidationsansatz oder das isolierte Oxidationsprodukt eingesetzt. Gewünschtenfalls kann vor der Neutralisation, die vorzugsweise mit einer anorganischen Säure wie Salz- oder Schwefelsäure durchgeführt wird, mit Chlorlauge nachoxidiert werden.

Die Lösungsmittelbehandlung kann in Gegenwart eines Säurepuffers wie Natriumacetat oder Trinatriumphosphat erfolgen. Vorzugsweise behandelt man bei 80-150 °C gegebenenfalls unter Druck. Die Behandlungszeit beträgt vorzugsweise 3 bis 12 h.

Beispiele für zur Behandlung geeignete organische Flüssigkeiten sind aliphatische Alkohole, insbesondere Alkanole mit 1-10 C-Atomen und Alkandiole mit 2-3 C-Atomen wie Methanol, Ethanol, Butanol, Hexanol, Decanol, Ethylenglykol und Propylenglykol ; aliphatische Carbonsäuren mit 1-8 C-Atomen, insbesondere Alkancarbonsäuren wie Ameisensäure, Essigsäure, Propionsäure, n-Buttersäure, i-Buttersäure, Valeriansäure, Trimethylessigsäure, Capronsäure, Caprylsäure, Pelargonsäure ; Ester aliphatischer Carbonsäuren, insbesondere $C_1$-$C_4$-Alkylester von Alkancarbonsäuren mit 1-8 C-Atomen wie Ameisensäuremethylester, Ameisensäureethylester, Essigsäuremethylester, Essigsäureethylester, Essigsäurepropylester, Essigsäurebutylester, Essigsäureamylester, Propionsäuremethylester, Propionsäureethylester, Buttersäuremethylester, Buttersäureethylester, Valeriansäuremethylester, Valeriansäureethylester, Adipinsäuredimethylester, Adipinsäurediethylester, Zitronensäuretriethylester ; Formamide wie Formamid, N-Methylformamid und N,N-Dimethylformamid ; Acetamide wie N-Methylacetamid, N,N-Dimethylacetamid, N-Ethylacetamid und N,N-Diethylacetamid ; Amine, insbesondere $C_1$-$C_6$-Alkyl- oder $C_1$-$C_6$-Hydroxyalkylamine wie Diethylamin, Triethylamin, Propylamin, Dipropylamin, Butylamin, Amylamin, Hexylamin, Ethylendiamin, Trimethylendiamin, Pentamethylendiamin, Ethanolamin, Triethanolamin und Pyridin ; gegebenenfalls substituierte aromatische Kohlenwasserstoffe wie Benzol, niedere Alkylbenzole wie Toluol, Xylol, Ethylbenzol, Cumol und deren (technische) Gemische, Chlorbenzol, Dichlorbenzol, Trichlorbenzol und deren (technische) Gemische und Nitrobenzol.

Bevorzugt eingesetzt werden die $C_1$-$C_4$-Alkylester von aromatischen Carbonsäuren, insbesondere von Benzol-mono- und -dicarbonsäuren, die durch Hydroxy substituiert sein können. Typische Beispiele sind die $C_1$-$C_4$-Alkylester von Benzoesäure, Salicylsäure und Phthalsäure wie Benzoesäuremethylester, Salicylsäuremethylester und Phthalsäuredimethylester.

Besonders gut zur Konditionierung von 4,4',7,7'-Tetrachlorthioindigo geeignet sind die Phthalsäureester.

So ist ein neues Verfahren zur Herstellung von 4,4',7,7'-Tetrachlorthioindigo-Pigmenten, dadurch gekennzeichnet, daß man 4,4',7,7'-Tetrachlorthioindigo mit einem Phthalsäureester bei Temperaturen von 60 bis 200°C, vorzugsweise 2 bis 24 h, behandelt. Vorzugsweise behandelt man bei 60 bis 150 °C gegebenenfalls unter Druck. Die Behandlungszeit beträgt vorzugsweise 3 h bis 12 h.

Bevorzugt eingesetzt werden die Phthalsäuredi-$C_1$-$C_4$-alkylester, insbesondere Phthalsäuredimethylester.

Als Ausgangsprodukt der Behandlung wird rohes 4,4',7,7'-Tetrachlorthioindigo, dessen Herstellung literaturbekannt ist, eingesetzt (siehe z. B. DE-OS 2 825 513, DE-OS 2 504 935, DE-OS 3 117 055, US-PS 2 158 032).

Bei den vorstehend beschriebenen Konditionierungsverfahren für durch Oxidation von 3-Hydroxy-4,7-dichlor-1-thionaphthen mit Sauerstoff oder Sauerstoff enthaltenden Gasen oder anderweitig hergestellten rohen 4,4',7,7'-Tetrachlorthioindigo wird das Ausgangsprodukt vorzugsweise als feuchter Preßkuchen in die Behandlung mit der organischen Flüssigkeit eingesetzt.

Die organische Flüssigkeit sollte im Konditionierungsmedium in Mengen von mindestens 0,1 Gew.-Teil pro Gewichtsteil trockenes Pigment anwesend sein. Dieses Verhältnis kann in weiten Grenzen schwanken und ist abhängig von der Art der jeweiligen organischen Flüssigkeit. Vorzugsweise werden 0,1 bis 100 Gew.-Teile, besonders bevorzugt 0,2 bis 50 Gew.-Teile organische Flüssigkeit pro Gewichtsteil trockenes Pigment eingesetzt.

Bei Verwendung der Ester aromatischer Carbonsäuren werden beispielsweise bevorzugt 0,3 bis 3 Gew.-Teile pro Gewichtsteil trockenes Pigment eingesetzt.

Vorzugsweise enthält das Behandlungsmedium weiterhin 1 bis 30 Gewichtsteile Wasser, besonders bevorzugt 3 bis 20 Gew.-Teile, ganz besonders bevorzugt 5 bis 12 Gewichtsteile Wasser pro Gewichtsteil trockenes Pigment.

Nach Beendigung der Konditionierung wird das Pigment in üblicher Weise, z. B. durch Wasserwäsche oder Destillation mit oder ohne Dampf von der organischen Flüssigkeit befreit, wobei die Anwendbarkeit dieser Methoden von den Löslichkeitseigenschaften der organischen Flüssigkeit bestimmt wird.

Von Carbonsäureestern kann das Pigment leicht durch Verseifung der Ester zu wasserlöslichen Carboxylaten befreit werden.

Das wie vorstehend beschrieben erhältliche 4,4',7,7'-Tetrachlorthioindigo ist sehr rein und farbstark und eignet sich je nach den Behandlungsbedingungen besonders gut zur Einfärbung von Kunststoffen wie Polyvinylchlorid, Polyethylen, Polyester o. ä. oder zur Pigmentierung von Einbrennlacken. Die Pigmente zeigen eine sehr gute Dispergierbarkeit, ein sehr gutes Fließverhalten im Lack und liefern brillante und farbstarke Färbungen.

Bei der Herstellung des in das erfindungsgemäße Verfahren eingesetzten Ausgangsproduktes geht man z. B. so vor, daß man 2,5-Dichlorphenylthioglykolsäure in einem Gemisch aus Chlorsulfonsäure und einem Halogenid einer S- oder P-haltigen anorganischen Säure wie Thionylchlorid, Sulfurylchlorid, Phosphoroxychlorid, Phosphorpentachlorid, Phosphortrichlorid, Dischwefeldichlorid o. ä. umsetzt.

Die Mengen und das Mischungsverhältnis an Chlorsulfonsäure und dem Halogenid können in weiten Bereichen variiert werden, z. B. kommen auf 1M 2,5-Dichlorphenylthioglykolsäure 5-30 M, vorzugsweise 10-25 M Chlorsulfonsäure und 0,5-3 M, vorzugsweise 1-2,5 M Halogenid zur Anwendung. Die Reaktionstemperatur liegt im Bereich von etwa — 10 °C bis etwa 35 °C, vorzugsweise im Bereich von etwa 0 °C bis etwa 10 °C. Die Reaktionszeit beträgt je nach Art des eingesetzten Säurehalogenids 2-20 h.

Das Reaktionsgemisch wird anschließend auf Eiswasser gegeben, abgesaugt und mit Wasser gewaschen.

Das wassserfeuchte isolierte Produkt kann nun je nach den angewendeten Reaktionsbedingungen aus einem Gemisch aus Tetrachlorthioindigo und 3-Hydroxydichlorthionaphthen oder aus reinem 3-Hydroxydichlorthionaphen (vorzugsweise bei Verwendung von Chlorsulfonsäure und Phosphor-III-chlorid) bestehen.

Anschließend wird das Reaktionsprodukt direkt in Wasser, das durch Zusatz von Basen, wie Natriumhydroxid, Kaliumhydroxid, Soda, Ammoniak, Bariumhydroxid, alkalisch gestellt worden ist, angeschlagen und oxidiert.

Bevorzugt arbeitet man bei einem pH zwischen 9 und 14.

Die Oxidation wird dabei mit Sauerstoff oder Sauerstoff enthaltenden Gasen, z. B. Luft durchgeführt. Bevorzugt ist Luft.

Die Temperatur liegt dabei zwischen 10 °C und dem Siedepunkt des Gemisches, vorzugsweise bei 50 bis 100 °C.

Bei der Oxidation mit Sauerstoff oder Luft, können gegebenenfalls Katalysatoren, wie Metallsalze, -oxide, -hydroxide die als Metall ein Übergangsmetall enthalten, beispielsweise Kupfer, Kobalt, Mangan, Eisen, zur Beschleunigung der Oxidationsreaktion Verwendung finden.

Nach beendeter Oxidation, deren Verlauf anhand der Abnahme des 3-Hydroxy-dichlorthionaphthens z. B. chromatographisch oder durch Messung des Redoxpotentials verfolgt werden kann, wird das Reaktionsgemisch isoliert oder durch Zugabe einer anorganischen Säure, z. B. Salzsäure oder Schwefelsäure neutralisiert. Gewünschtenfalls kann vor der Neutralisation mit Chlorlauge nachoxidiert werden.

Die folgenden Beispiele veranschaulichen die Erfindung, ohne sie auf Einzelheiten zu beschränken.

Beispiel 1

In eine Mischung von 300 ml Chlorsulfonsäure und 30 ml Thionylchlorid werden bei 0 °C 50 g 2,5-Dichlorphenylthioglykolsäure eingetragen. Anschließend wird der Ansatz bei 0 °C 5 Stunden gerührt. Danach wird das Reaktionsgemisch in 1 250 ml Eiswasser eingetragen, 30 Minuten verrührt, abgesaugt und kongoneutral gewaschen.

Der feuchte Preßkuchen, der sich aus einer Mischung von 4,4',7,7'-Tetrachlorthioindigo und 4,7-Dichlor-3-hydroxythionaphten zusammensetzt, wird dann mit Wasser auf ein Volumen von 325 ml Wasser aufgefüllt und mit 22 g 50 %iger Natronlauge alkalisch gestellt. Bei 80 °C wird unter Durchleiten von ca. 20 l Luft/Stunde in ca. 6 Stunden oxidiert.

Nachdem mit ca. 60 ml Chlorlauge bei 60 °C nachbehandelt worden ist, wird mit ca. 18 ml 36 %iger Salzsäure neutralisiert, 14 g Natriumacetat wasserfrei und 300 g Methanol zugesetzt und 5 Stunden auf 150 °C im Autoklaven erhitzt.

Anschließend wird das Methanol abdestilliert, das Produkt abgesaugt, gewaschen und getrocknet.

Man erhält 38,9 g (84,9 % der Theorie) eines rotvioletten Pulvers. Es stellt ein sehr farbstarkes Pigment dar, das beim Einfärben von Einbrennlacken einen sehr gut fließfähigen Lack ergibt.

Beispiel 2

Man arbeitet analog zu Beispiel 1, jedoch unter Einsatz von 150 g Butanol an Stelle von Methanol und erhitzt 8 Stunden auf 140 °C.

Das auf diesen Weg erhaltene Pigment zeigt beispielsweise in PVC eine sehr gute Dispergierbarkeit, hohe Farbstärke und Brillanz.

Beispiel 3

Man arbeitet analog zu Beispiel 1, setzt jedoch an Stelle des Alkanols 18,5 g Phthalsäuredimethylester zu und erhitzt 10 Stunden auf 100 °C.

Anschließend wird auf 80 °C abgekühlt und der Ester mit 21 g 50 %iger Natronlauge in 2 Stunden bei 80 °C verseift. Danach wird abgesaugt, mit Wasser neutral gewaschen und getrocknet. Man erhält 39,1 g (85,3 % der Theorie) eines rotvioletten Pulvers, das beim Einfärben von Einbrennlacken einen sehr gut fließfähigen Lack und hohe Farbstärke und Brillanz liefert.

Beispiel 4

Man arbeitet analog zu Beispiel 3, erhitzt jedoch 8 Std. auf 140 °C.

Das so hergestellte Pigment zeigt beispielsweise in PVC eine sehr gute Dispergierbarkeit, hohe Farbstärke und Brillanz.

Beispiel 5

Man arbeitet analog zu Beispiel 4, setzt jedoch 20 g Salicylsäuremethylester statt Phthalsäuredimethylester ein.

Das auf diesem Weg erhaltene Pigment zeigt ebenfalls in PVC eine sehr gute Dispergierbarkeit, hohe Farbstärke und Brillanz.

Beispiel 6

Man arbeitet analog zu Beispiel 3 der DE-OS 31 17 055, rührt jedoch den auf diesem Weg erhaltenen feuchten Freßkuchen (ca. 60 g) des 4,4',7,7'-Tetrachlorthiodiindigos mit 30 g Wasser an, setzt 40 g Phthalsäuredimethylester zu und erhitzt 3 Stunden auf 140 °C. Anschließend wird auf 80 °C abgekühlt und der Ester mit 11 g 50 %iger Natronlauge in 2 Stunden bei 80 °C verseift. Danach wird abgesaugt mit Wasser neutral gewaschen und getrocknet.

Man erhält 19,5 g (85,2 % der Theorie) eines rotvioletten Pulvers, das beispielsweise in PVC eine sehr gute Dispergierbarkeit, hohe Farbstärke und Brillanz zeigt.

Beispiel 7

Man arbeitet analog zu Beispiel 1 der DE-OS 28 25 313, rührt jedoch den auf diesem Weg erhaltenen feuchten Preßkuchen (ca. 200 g) des 4,4',7,7'-Tetrachlorthioindigos mit 135 g Wasser an, setzt 13 g Natriumacetat und 20 g Phthalsäuredimethylester zu und erhitzt 8 Stunden auf 150 °C. Anschließend wird auf 80 °C abgekühlt und der Ester mit 10 g 50 %iger Natronlauge in 2 Stunden bei 80 °C verseift. Danach wird abgesaugt, mit Wasser neutral gewaschen und getrocknet.

Man erhält 67,3 g (92,7 % der Theorie) eines rotvioletten Pulvers, das beispielsweise in PVC eine sehr gute Dispergierbarkeit, hohe Farbstärke und Brillanz zeigt.

**Patentansprüche**

1. Verfahren zur Herstellung von 4,4',7,7'-Tetrachlorthioindigo-Pigmenten durch Oxidation von 3-Hydroxy-4,7-dichlor-1-thionaphthen im wäßrig alkalischen Medium in Gegenwart von Sauerstoff oder Sauerstoff enthaltenden Gasen, dadurch gekennzeichnet, daß man das Reaktionsprodukt nach der Oxidation mit einer organischen Flüssigkeit, die vor, während oder nach der Oxidation zugesetzt wird, bei Temperaturen von 60 °C bis 200 °C 2 h oder länger behandelt.

2. Verfahren gemäß Anspruch 1, dadurch gekennzeichnet, daß man mit einer organischen Flüssigkeit aus der Reihe aliphatische Alkohole, aliphatische Carbonsäuren, Ester aliphatischer und aromatischer Carbonsäuren, Formamide, Acetamide, Amine, gegebenenfalls substituierte aromatische Kohlenwasserstoffe behandelt.

3. Verfahren gemäß Anspruch 1, dadurch gekennzeichnet, daß man mit einem $C_1$-$C_4$-Alkylester einer aromatischen Carbonsäure behandelt.

4. Verfahren zur Herstellung von 4,4',7,7'-Tetrachlorthioindigo-Pigmenten, dadurch gekennzeichnet, daß man 4,4',7,7'-Tetrachlorthioindigo mit einem Phthalsäureester bei Temperaturen von 60 °C bis 200 °C behandelt.

5. Verfahren gemäß den Ansprüchen 1 und 4, dadurch gekennzeichnet, daß man mit Phthalsäuredimethylester behandelt.

6. Verfahren gemäß den Ansprüchen 1 bis 5, dadurch gekennzeichnet, daß man das Ausgangsprodukt der Behandlung als feuchten Preßkuchen einsetzt.

7. Verfahren gemäß Ansprüchen 1 bis 6, dadurch gekennzeichnet, daß man mit 0,1 bis 100 Gewichtsteilen organischer Flüssigkeit pro Gewichtsteil trockenes Pigment behandelt.

8. Verfahren gemäß den Ansprüchen 1 bis 6, dadurch gekennzeichnet, daß man mit 0,2 bis 50 Gew.-Teilen organischer Flüssigkeit pro Gewichtsteil trockenes Pigment behandelt.

9. Verfahren gemäß den Ansprüchen 1 bis 7, dadurch gekennzeichnet, daß das Behandlungsmedium 1 bis 30 Gewichtsteile Wasser pro Gewichtsteil trockenes Pigment enthält.

**Claims**

1. Process for preparing 4,4',7,7'-tetrachlorothioindigo pigments by oxidising 3-hydroxy-4,7-dichloro-1-thionaphthene in an aqueous alkaline medium in the presence of oxygen or oxygen-containing gases, characterised in that after the oxidation the reaction product is treated at temperatures of 60 °C to 200 °C for 2 hours or longer with an organic liquid which is added before, during or after the oxidation.

2. Process according to Claim 1, characterised in that the treatment is carried out with an organic liquid from the series comprising aliphatic alcohols, aliphatic carboxylic acids, esters of aliphatic and aromatic carboxylic acids, formamides, acetamides, amines and optionally substituted aromatic hydrocarbons.

3. Process according to Claim 1, characterised in that the treatment is carried out with a $C_1$-$C_4$-alkyl ester of an aromatic carboxylic acid.

4. Process for preparing 4,4',7,7'-tetrachlorothioindigo pigments, characterised in that 4,4',7,7'-tetrachlorothioindigo is treated with a phthalic acid ester at temperatures of 60 °C to 200 °C.

5. Process according to Claims 1 to 4, characterised in that the treatment is carried out with dimethyl phthalate.

6. Process according to Claims 1 to 5, characterised in that the starting material for the treatment is in the form of a moist press cake.

7. Process according to Claims 1 to 6, characterised in that the treatment is carried out with 0.1 to 100 parts by weight of organic liquid per part by weight of dry pigment.

8. Process according to Claims 1 to 6, characterised in that the treatment is carried out with 0.2 to 50 parts by weight of organic liquid per part by weight of dry pigment.

9. Process according to Claims 1 to 7, characterised in that the treatment medium contains 1 to 30 parts by weight of water per part by weight of dry pigment.

**Revendications**

1. Procédé de production de pigments de 4,4',7,7'-tétrachlorothioindigo par oxydation du 3-hydroxy-4,7-dichloro-1-thionaphtalène en milieu alcalin aqueux en présence d'oxygène ou de gaz contenant de l'oxygène, caractérisé en ce qu'on traite à des températures de 60 °C à 200 °C pendant 2 heures ou plus le produit de réaction, après l'oxydation, avec un liquide organique qui est ajouté avant, pendant ou après l'oxydation.

2. Procédé suivant la revendication 1, caractérisé en ce qu'on effectue le traitement avec un liquide organique de la série comprenant des alcools aliphatiques, des acides carboxyliques aliphatiques, des esters d'acides carboxyliques aliphatiques et aromatiques, des formamides, des acétamides, des amines, des hydrocarbures aromatiques éventuellement substitués.

3. Procédé suivant la revendication 1, caractérisé en ce qu'on effectue le traitement avec un ester d'alkyle en $C_1$ à $C_4$ d'un acide carboxylique aromatique.

4. Procédé de production de pigments de 4,4',7,7-tétra-chlorothioindigo, caractérisé en ce qu'on traite le 4,4',7,7'-tétrachlorothioindigo avec un ester d'acide phtalique à des températures de 60 °C à 200 °C.

5. Procédé suivant les revendications 1 à 4, caractérisé en ce qu'on effectue le traitement avec l'ester diméthylique de l'acide phtalique.

6. Procédé suivant les revendications 1 à 5, caractérisé en ce qu'on utilise la matière de départ du traitement sous la forme d'un gâteau humide de filtre-presse.

7. Procédé suivant les revendications 1 à 6, caractérisé en ce qu'on effectue le traitement avec 0,1 à 100 parties en poids de liquide organique par partie en poids de pigment sec.

8. Procédé suivant les revendications 1 à 6, caractérisé en ce qu'on effectue le traitement avec 0,2 à 50 parties en poids de liquide organique par partie en poids de pigment sec.

9. Procédé suivant les revendications 1 à 7, caractérisé en ce que le milieu de traitement contient.1 à 30 parties en poids d'eau par partie en poids de pigment sec.